# EUROPÄISCHE PATENTANMELDUNG

(11) **EP 1 850 048 A2**
(43) Veröffentlichungstag der Anmeldung: **31.10.2007**
(21) Anmeldenummer: 07105886.1
(22) Anmeldetag: 10.04.2007
(51) Int. Cl.: F16L 21/08, F16L 13/16

(54) **Fluidleitungssteckverbindung**

(30) Priorität: 24.05.2006 DE 202006008266 U; 07.04.2006 DE 102006016421
(71) Anmelder: Wiesauplast Kunststoff und Formenbau GmbH & Co. KG, 95676 Wiesau (DE)
(72) Erfinder: Zimmermann, Hartmut, 95666 Mitterteich (DE)
(74) Vertreter: Stoffregen, Hans-Herbert

(57) **Zusammenfassung**

Die Erfindung bezieht sich auf eine Fluidleitungssteckverbindung (10, 100), umfassend eine an einem Endabschnitt (12) einer ersten Leitung (14) angebrachte Verbindungsmuffe (16), eine von einem Endabschnitt (18) einer zweiten Leitung (20) sich erstreckende Verbindungshülse (22, 220) mit einer Ausformung (24, 240) zur Aufnahme des Endabschnittes (12) der ersten Leitung (14) und der Verbindungsmuffe (16), ein zwischen erster und zweiter Leitung (14, 18) angeordnetes Dichtelement (30) sowie ein die Verbindungsmuffe (16) in der Verbindungshülse arretierendes Arretierungselement (28). Um eine einfach Montage und eine kostengünstige Herstellung zu erreichen ist vorgesehen, dass das Dichtelement (30) an einer Stirnseite (32) des Endabschnittes (12) der ersten Leitung (14) mittels eines in den Endabschnitt (12) eingreifenden und an eine Außenfläche des Dichtelementes (30) einen nach außen umlaufenden Rand (38) aufweisenden Hohlkörpers (34) fixiert ist und dass der Hohlkörper (34) innerhalb der ersten Leitung (14) durch die auf den Endabschnitt (12) aufgequetschte Verbindungsmuffe (16) fixiert ist.

## Beschreibung

Die Erfindung bezieht sich auf eine Fluidleitungssteckverbindung, umfassend eine an einem Endabschnitt einer ersten Leitung angebrachte Verbindungsmuffe, eine von einem Endabschnitt einer zweiten Leitung sich erstreckende Verbindungshülse mit einer Ausformung zur Aufnahme des Endabschnittes der ersten Leitung und der Verbindungsmuffe, ein zwischen erster und zweiter Leitung angeordnetes Dichtelement sowie ein die Verbindungsmuffe in der Verbindungshülse arretierendes Arretierungselement.

Eine derartige Fluidleitungssteckverbindung ist aus DE 203 18 857 U1 bekannt. Dort wird eine Fluidleitungsverbindungsanordnung mit mindestens einem Verbindungselement beschrieben, welches geeignet ist, zwei Leitungsenden dicht miteinander zu verbinden. Die Anordnung zeichnet sich dadurch aus, dass auf einem Endabschnitt einer ersten Leitung eine Verbindungsmuffe mit einer vorderen ringförmigen Stirnseite und einer hinteren ringförmigen Stirnseite dicht anliegend aufgebracht ist. Von einem Ende einer zweiten Leitung steht eine Verbindungshülse vor, aus der innen eine ringförmige Schulter ausgeformt ist welche geeignet ist, den Endabschnitt der ersten Leitung mit der Verbindungsmuffe aufzunehmen.

Ferner ist vorgesehen, dass an der Verbindungshülse ein Arretierungselement lösbar anbringbar ist, welches an der hinteren Stirnseite der in der Verbindungshülse eingesteckten Verbindungsmuffe anliegt, wobei die vordere ringförmige Stirnseite der Verbindungsmuffe mittelbar oder unmittelbar an der ringförmigen Schulter der Verbindungshülse abdichtend anliegt. Bei dieser Ausführungsform ist ein Dichtelement in Form eines O-Rings vorgesehen, welches lose auf einen Endabschnitt der ersten Leitung aufgeschoben und zwischen Verbindungsmuffe und Verbindungshülse angeordnet ist. Dies kann sowohl bei der Montage als auch bei der Demontage der Fluidleitungsverbindung zum Verlust der Dichtheit führen, was insbesondere an schwer zugänglichen Stellen mit einem Mehraufwand verbunden ist.

Die Verbindungsmuffe ist als Metallring ausgebildet und auf das Leitungsende aufgequetscht. Zum Schutz der flexiblen Kunststoffleitung vor Deformierung durch den Quetschvorgang ist im Bereich der Verbindungsmuffe ein Stützrohr eingeführt, eine Einheit, die ebenfalls zu einem Montage-Mehraufwand führt.

Davon ausgehend liegt der vorliegenden Erfindung die Aufgabe zu Grunde, eine Fluidleitungssteckverbindung der eingangs genannten Art dahingehend weiterzubilden, dass diese bei kostengünstiger Herstellung zusätzlich auch einfach zu montieren ist.

Die Aufgabe wird erfindungsgemäß dadurch gelöst, dass das Dichtelement an einer Stirnseite des Endabschnittes der ersten Leitung mittels eines in den Endabschnitt eingreifenden und an eine Außenfläche des Dichtelementes einen nach außen umlaufenden Rand aufweisenden Hohlkörpers fixiert ist und dass der Hohlkörper innerhalb der ersten Leitung durch die auf den Endabschnitt aufgequetschte Verbindungsmuffe fixiert ist.

Dadurch wird der Vorteil erreicht, dass das Dichtelement einerseits fest mit der Leitung verbunden ist und andererseits gleichzeitig durch den Hohlkörper ein Stützelement für die aufgequetschte Verbindungsmuffe zur Verfügung gestellt wird.

In einer bevorzugten Ausführungsform ist der Hohlkörper als Hohlniet ausgebildet.

In einer weiteren bevorzugten Ausführungsform kann das Dichtelement als O-Ring ausgebildet sein, mit einem Außendurchmesser, der größer ist als ein Außendurchmesser des Endabschnittes der ersten Leitung.

Um eine einfache Montage zu gewährleisten, ist die Verbindungsmuffe als Oetiker-Klemme ausgebildet, welche einerseits eine Fixierung des den O-Ring stirnseitig fixierenden Hohlnietes und andererseits eine Fixierung des Endabschnittes innerhalb der Verbindungshülse gewährleistet. Im Gegensatz zum Stand der Technik ist hierbei nicht zwingend erforderlich, dass die Verbindungsmuffe dichtend an der Leitungsoberfläche anliegt, da durch den O-Ring eine vollständige Abdichtung erreicht wird. Der Vorteil der Verwendung einer Oetiker-Klemme liegt darin, dass beim Quetschvorgang eine radial nach außen ragende Schlaufe gebildet wird, gegen die das Arretierungselement anliegt und somit den Endabschnitt in der Verbindungshülse arretiert.

Zur Aufnahme des Endabschnittes der ersten Leitung und der Verbindungsmuffe weist die Ausformung einen vorderen Bereich auf, in dem die Verbindungsmuffe aufgenommen wird und mittels des Arretierungselementes arretierbar ist, sowie einen hinteren Bereich, in dem der Endabschnitt der ersten Leitung mit O-Ring dichtend anliegt.

Gemäß einer bevorzugten Ausführungsform ist die Ausformung zur Aufnahme der Verbindungsmuffe und des Endabschnitts der ersten Leitung als axiale Bohrung ausgebildet, umfassend den vorderen Bereich, dessen Durchmesser im Wesentlichen dem Durchmesser der Verbindungsmuffe entspricht, wobei eine sich quer zur Bohrung erstreckende und diese freilegende Aussparung vorgesehen ist, in der sich ein Abschnitt der Verbindungsmuffe erstreckt und durch das Arretierungselement arretiert ist sowie ein sich in einer umlaufenden Wandung der Verbindungshülse zwischen Stirnseite und Aussparung in axialer Richtung erstreckender Schlitz zur Führung des sich radial erstreckenden Abschnitts der Verbindungsmuffe sowie den hinteren Bereich, in den der stirnseitige Endabschnitt mit Dichtelement fluiddicht einsteckbar ist.

Des Weiteren ist vorgesehen, dass die Verbindungshülse eine der ersten Ausformung gegenüberliegende zweite Ausformung wie Bohrung aufweist, in der der Endabschnitt der zweiten Leitung fluiddicht angeordnet wie verklebt ist.

Zur Aufnahme des Endabschnitts mit Dichtelement kann der hintere Bereich der Bohrung eine zylinderförmige Oberfläche aufweisen. Alternativ besteht auch die Möglichkeit, dass der hintere Bereich eine kegelstumpfförmige Oberfläche aufweist, wobei diese Ausführungsform den Vorteil hat, dass Fertigungstoleranzen auf einfache Art und Weise ausgeglichen werden können.

Gemäß einer weiteren bevorzugten Ausführung ist das Arretierungselement als Federstahl-Klemme ausgebildet, welche einen U-förmigen Querschnitt aufweist, mit einem ersten Schenkel, der an die zylindermantelförmige Oberfläche der Verbindungshülse angepasst ist und einem zweiten im Wesentlichen gerade verlaufenden Schenkel, der in der in dem Außenmantel der Verbindungshülse quer verlaufenden Aussparung anliegt.

Alternativ zu dem Arretierelement als Federstahl-Klemme kann die Verbindungsmuffe innerhalb der Verbindungshülse auch mittels einer Schraubverbindung fixiert sein.

Ferner bezieht sich die Erfindung auf eine Fluidleitung für eine zuvor beschriebene Fluidleitungssteckverbindung. Diese zeichnet sich dadurch aus, dass die Leitung an zumindest einer Stirnseite ein Dichtelement aufweist, welches mittels eines in einen Endabschnitt der Fluidleitung eingreifenden und an einer Außenfläche des Dichtelementes einen nach außen umlaufenden Rand aufweisenden Hohlkörpers fixiert ist, wobei der Hohlkörper innerhalb der Leitung durch eine auf den Endabschnitt aufgequetschte Verbindungsmuffe fixiert ist. In einer bevorzugten Ausführungsform ist die Fluidleitung vorkonfektioniert und weist auf beiden ihrer Stirnseiten jeweils ein mittels Hohlkörper bzw. Hohlniet und Verbindungsmuffe fixiertes Dichtelement auf.

Bei dieser Ausführungsform wird zum Verbinden zweier Schläuche in beiden Schläuchen bzw. Leitungen ein Hohlkörper bzw. Hohlniet eingesetzt und außen auf jeden Schlauch im Bereich dieser Hülse ein Ring gepresst. Zwischen dem umlaufenden Rand des Hohlniets und der Stirnseite der Leitung ist der O-Ring fixiert. Diese konfektionierten Schlauchenden werden dann in die beispielsweise aus Kunststoff bestehende Verbindungshülse gesteckt, wobei diese durch Einschieben des Arretierungselementes gegen das herausziehen bzw. Herausfallen aufgrund des Systemsdrucks geschützt werden.

Ein Verbindungselement zweier Schläuche zeichnet sich dadurch aus, dass in beiden Schläuchen eine Hülse eingesetzt ist und außen auf jedem Schlauch, im Bereich dieser Hülse, ein Ring gepresst ist, wobei auf den Schlauch stirnseitig am Ring anstehend ein O-Ring aufgeschoben ist, wobei diese Schlauchenden in ein Verbindungselement einsteckbar sind, in dem diese durch Einschieben einer Klammer hinter dem Ring gegen Herausziehen bzw. Herausfallen durch ein Systemdruck geschützt sind. Vorzugsweise besteht das Verbindungselement aus Kunststoff.

Weitere Einzelheiten, Vorteile und Merkmale der Erfindung ergeben sich nicht nur aus den Ansprüchen, den diesen zu entnehmenden Merkmalen, -für sich und/oder in Kombination-, sondern auch aus der nachfolgenden Beschreibung von der Zeichnung zu entnehmenden Ausführungsbeispielen.

Es zeigen:
- Fig. 1: eine Seitenansicht in Schnittdarstellung einer ersten Ausführungsform einer Fluidleitungssteckverbindung,
- Fig. 2: eine Seitenansicht in Schnittdarstellung einer zweiten Ausführungsform einer Fluidleitungssteckverbindung,
- Fig. 3: eine Draufsicht auf einen Teilabschnitt einer Verbindungshülse der Fluidleitungssteckverbindung,
- Fig. 4: eine Querschnittsansicht der Fluidleitungssteckverbindung mit einem als Feder ausgebildeten Arretierungselement und
- Fig. 5: eine Querschnittsansicht einer Fluidleitungssteckverbindung mit einem als Schraubelement ausgebildeten Arretierungselement.

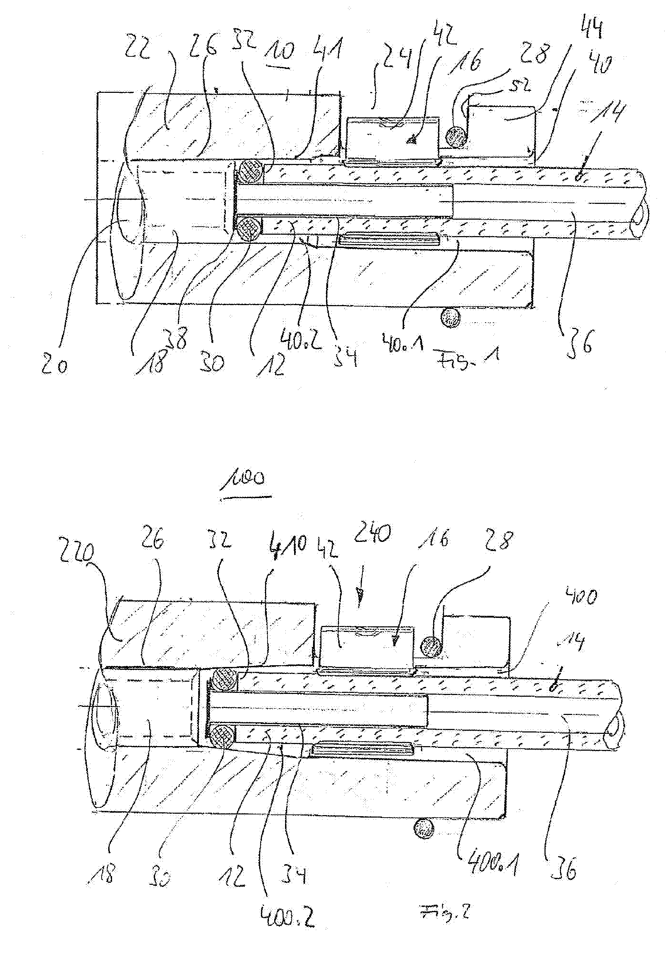

Fig. 1 zeigt eine Seitenansicht in Schnittdarstellung einer Fluidleitungssteckverbindung 10. Die Fluidleitungssteckverbindung umfasst eine an einem Endabschnitt 12 einer ersten Leitung 14 angebrachte Verbindungsmuffe 16 sowie eine mit einem Endabschnitt 18 einer zweiten Leitung 20 fluiddicht verbundene Verbindungshülse 22.

In der Verbindungshülse 22 ist eine erste Ausformung 24 zur Aufnahme des Endabschnittes 12 der ersten Leitung 14 sowie der Verbindungsmuffe 16 eingebracht und eine zweite Ausformung 26, in der der Endabschnitt 18 der zweiten Leitung fluiddicht mit der Verbindungshülse 22 verbunden ist.

Die Verbindungsmuffe 16 wird nach Einstecken in die Verbindungshülse 22 durch ein Arretierungselement 28 gehalten, welches im vorliegenden Ausführungsbeispiel als Federstahl-Klemme ausgebildet ist.

Um eine fluiddichte Fluidleitungssteckverbindung zu erhalten, ist zwischen dem Leitungsende 12 der ersten Leitung 14 und dem Leitungsende 18 der zweiten Leitung ein Dichtelement 30 angeordnet.

Das Dichtelement 30 ist als O-Ring ausgebildet, dessen Außendurchmesser größer ist als der Außendurchmesser der Leitung 14. Der O-Ring 30 ist an einer Stirnseite 32 der ersten Leitung 14 mittels eines Hohlkörpers 34 fixiert, der sich koaxial im Innern 36 der ersten Leitung 14 erstreckt und einen nach außen umlaufenden Rand 38 aufweist, mit dem der O-Ring 30 am stirnseitigen Ende 32 des Endabschnittes 12 fixierbar ist. Der Hohlkörper 34 kann als Hohlniet ausgebildet sein, welcher mittels der als Quetschverbindung ausgebildeten Verbindungsmuffe 16 innerhalb des Endabschnittes 12 fixierbar ist. Bei dieser Ausführungsform ist die Verbindungsmuffe 16 als Oetiker-Klemme ausgebildet.

Die Ausformung 24 ist als axiale Bohrung 40 ausgebildet, mit einem vorderen Bereich 40.1, in den die Verbindungsmuffe 16 aufgenommen wird und mittels des Arretierungselementes 28 arretierbar ist sowie einem hinteren Bereich 40.2, in dem der Endabschnitt 12 der ersten Leitung 14 mit Dichtelement 30 dichtend angeordnet ist.

Der vordere Bereich 40.1 weist einen Durchmesser auf, der im Wesentlichen dem Durchmesser der Verbindungsmuffe 16 entspricht.

Der hintere Bereich 40.2 der Bohrung 40 weist eine zylinderförmige Oberfläche 41 auf, an der ein Außenrand des Dichtelementes 30 dichtend anliegt.

Die in der Verbindungshülse 22 eingebrachte zweite Ausformung 26 ist als Bohrung ausgebildet mit einem Durchmesser, der im Wesentlichen dem Außendurchmesser des Endabschnitts 18 der zweiten Leitung 20 entspricht. Dieser ist in der Bohrung dichtend angeordnet, beispielsweise mit der Verbindungshülse verklebt. Im weiteren Verlauf geht diese Bohrung in den hinteren Bereich 40.2 über.

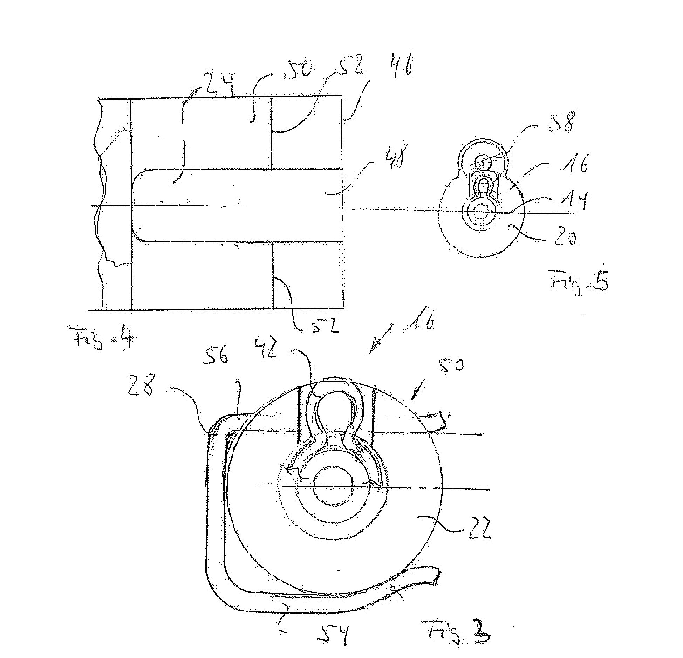

Fig. 2 zeigt eine zweite Ausführungsform einer Fluidleitungssteckverbindung 100, umfassend eine Verbindungsmuffe 220 mit einer Ausformung 240 zur Aufnahme des stirnseitigen Endabschnitts 12 der ersten Leitung 14 mit Dichtelement 30 sowie Verbindungsmuffe 16. Die Verbindungshülse 220 weist ebenfalls eine axiale Bohrung 400 mit einem vorderen Bereich 400.1 zur Aufnahme der Verbindungsmuffe 16 sowie einen hinteren Bereich 400.2 zur Aufnahme des Endabschnittes 12 mit Dichtelement 30 auf. Im Unterschied zu der Ausführungsform gemäß Fig. 1 weist der hintere Bereich 400.2 eine kegelstumpfförmige Oberfläche 410 auf, an der das Dichtelement 30 mit seiner Oberfläche dichtend anliegt. Aufgrund der kegelstumpfförmigen Ausführung der Oberfläche 410 können Fertigungstoleranzen beispielsweise im Durchmesser des Dichtelementes 30 ausgeglichen werden.

Gemäß Fig. 3 weist die Oetiker-Klemme 16 eine Quetschschlaufe 42 auf, für die in einer Außenwandung 44 der Verbindungshülse 22, 220 in dem der ersten Leitung 14 zugewandten Stirnseite 46 ein Einführschlitz 48 eingebracht ist, wie dies in Fig. 4 dargestellt ist. Dieser erstreckt sich in einer quer verlaufenden, die Bohrung 40 freilegende Aussparung 50. Im eingesteckten Zustand erstreckt sich die Quetschschlaufe 42 in radialer Richtung in die Aussparung 50 und wird durch das Arretierungselement 28 arretiert, welches sich zwischen einer außen liegenden Innenwand 52 der Aussparung und der Quetschschlaufe 42 der Oetiker-Klemme 16 erstreckt.

Dabei ist das Arretierungselement 28 als U-förmige Federstahl-Klemme ausgebildet, mit einem ersten Schenkel 54, welcher an der Außenkontur der Verbindungshülse 20 anliegt und einem zweiten Schenkel 56, der sich quer zur Längserstreckung der Verbindungshülse 20 in der Aussparung 50 erstreckt.

Fig. 4 zeigt eine Querschnittsdarstellung einer alternativen Ausführungsform der Fluidleitungssteckverbindung 10, wobei die Verbindungsmuffe 16 mittels einer Schraubverbindung 58 fixiert ist.

## Patentansprüche

1. Fluidleitungssteckverbindung (10, 100), umfassend eine an einem Endabschnitt (12) einer ersten Leitung (14) angebrachte Verbindungsmuffe (16), eine von einem Endabschnitt (18) einer zweiten Leitung (20) sich erstreckende Verbindungshülse (22, 220) mit einer Ausformung (24, 240) zur Aufnahme des Endabschnittes (12) der ersten Leitung (14) und der Verbindungsmuffe (16), ein zwischen erster und zweiter Leitung (14, 18) angeordnetes Dichtelement (30) sowie ein die Verbindungsmuffe (16) in der Verbindungshülse arretierendes Arretierungselement (28),
**dadurch gekennzeichnet,**
**dass** das Dichtelement (30) an einer Stirnseite (32) des Endabschnittes (12) der ersten Leitung (14) mittels eines in den Endabschnitt (12) eingreifenden und an eine Außenfläche des Dichtelementes (30) einen nach außen umlaufenden Rand (38) aufweisenden Hohlkörpers (34) fixiert ist und dass der Hohlkörper (34) innerhalb der ersten Leitung (14) durch die auf den Endabschnitt (12) aufgequetschte Verbindungsmuffe (16) fixiert ist.

2. Fluidleitungssteckverbindung nach Anspruch 1,
**dadurch gekennzeichnet,**
**dass** der Hohlkörper (34) als Hohlniet ausgebildet ist.

3. Fluidleitungssteckverbindung nach Anspruch 1 oder 2,
**dadurch gekennzeichnet,**
**dass** das Dichtelement (30) als O-Ring ausgebildet ist.

4. Fluidleitungssteckverbindung nach zumindest einem der vorhergehenden Ansprüche,
**dadurch gekennzeichnet,**
**dass** die Verbindungsmuffe (16) als Metallring, insbesondere Oetiker-Klemme ausgebildet ist.

5. Fluidleitungssteckverbindung nach zumindest einem der vorhergehenden Ansprüche,
**dadurch gekennzeichnet,**
**dass** ein Außendurchmesser des Dichtelementes (30) größer ist als ein Außendurchmesser des Endabschnittes (12) der ersten Leitung (14).

6. Fluidleitungssteckverbindung nach zumindest einem der vorhergehenden Ansprüche,
**dadurch gekennzeichnet,**
**dass** die Ausformung (24, 240) einen vorderen Bereich (40.1, 400.1) aufweist, in den die Verbindungsmuffe (16) aufgenommen wird und mittels des Arretierungselementes (28) arretierbar ist, sowie einen hinteren Bereich (40.2, 400.2) aufweist, in dem der Endabschnitt (12) der ersten Leitung (14) mit Dichtelement (30) dichtend angeordnet ist.

7. Fluidleitungssteckverbindung nach zumindest einem der vorhergehenden Ansprüche,
**dadurch gekennzeichnet,**
**dass** die Ausformung (24, 240) zur Aufnahme der Verbindungsmuffe (16) und des Endabschnitts (12) der ersten Leitung als axiale Bohrung (40, 400) ausgebildet ist, umfassen den vorderen Bereich (40.1, 400.1), dessen Durchmesser im Wesentlichen dem Durchmesser der Verbindungsmuffe (16) entspricht, wobei eine sich quer zur Bohrung (40, 400) erstreckende und diese freilegende Aussparung (50) vorgesehen ist, in der sich ein Abschnitt (42) der Verbindungsmuffe (16) erstreckt und durch das Arretierungselement (28) arretiert ist sowie ein sich in einer umlaufenden Wandung der Verbindungshülse (22) zwischen Stirnseite und Aussparung (50) in axialer Richtung erstreckender Schlitz (48) zur Führung des sich radial erstreckenden Abschnitts (42) der Verbindungsmuffe (16) sowie den hinteren Bereich (40.2, 400.2), in den der stirnseitige Endabschnitt (12) mit Dichtelement (30) fluiddicht einsteckbar ist.

8. Fluidleitungssteckverbindung nach zumindest einem der vorhergehenden Ansprüche,
**dadurch gekennzeichnet,**
**dass** die Verbindungshülse (22, 220) eine zweite Ausformung (26) wie Bohrung aufweist, in der der Endabschnitt (18) in der zweiten Leitung (20) fluiddicht angeordnet wie verklebt ist.

9. Fluidleitungssteckverbindung nach zumindest einem der vorhergehenden Ansprüche,
**dadurch gekennzeichnet,**
**dass** der hintere Bereich (40.2) der Bohrung (40) eine zylinderförmige Oberfläche (41) aufweist.

10. Fluidleitungssteckverbindung nach zumindest einem der vorhergehenden Ansprüche,
**dadurch gekennzeichnet,**
**dass** der hintere Bereich (400.2) der Bohrung (400) eine kegelstumpfförmige Oberfläche (410) aufweist.

11. Fluidleitungssteckverbindung nach zumindest einem der vorhergehenden Ansprüche,
**dadurch gekennzeichnet,**
**dass** die zweite Ausformung (26) in den hinteren Bereich (40.2, 400.2) übergeht.

12. Fluidleitungssteckverbindung nach zumindest einem der vorhergehenden Ansprüche,
**dadurch gekennzeichnet,**
**dass** der sich in die Aussparung (50) radial erstreckende Abschnitt (42) eine Quetschschlaufe der Oetiker-Klemme ist.

13. Fluidleitungssteckverbindung nach zumindest einem der vorhergehenden Ansprüche,
**dadurch gekennzeichnet,**
**dass** die Verbindungsmuffe (16) mittels einer Schraubverbindung (58) an der Verbindungshülse fixiert ist.

14. Fluidleitung (14) für eine Fluidleitungssteckverbindung (10) nach zumindest einem der Ansprüche 1 bis 13,
**dadurch gekennzeichnet,**
**dass** die Leitung (14) an zumindest einer Stirnseite (32) ein Dichtelement (30) aufweist, welches mittels eines in einen Endabschnitt (20) der Leitung (14) eingreifenden und an einer Außenfläche des Dichtelementes (30) einen nach außen umlaufenden Rand (38) aufweisenden Hohlkörpers (34) fixiert ist und dass der Hohlkörper (34) innerhalb der Leitung (14) durch eine auf den Endabschnitt (12) aufgequetschte Verbindungsmuffe (16) fixiert ist.

15. Fluidleitung (14) nach Anspruch 13,
**dadurch gekennzeichnet,**
**dass** die Leitung (14) an beiden ihrer Stirnseiten (32) ein Dichtelement (30) aufweist.

16. Verbindungselement zweier Schläuche
**dadurch gekennzeichnet,**
**dass** in beiden Schläuchen eine Hülse eingesetzt ist und außen auf jedem Schlauch, im Bereich dieser Hülse, ein Ring gepresst ist, wobei auf den Schlauch stirnseitig am Ring anstehend ein O-Ring aufgeschoben ist, wobei diese Schlauchenden in ein Verbindungselement einsteckbar sind, in dem diese durch Einschieben einer Klammer hinter dem Ring gegen Herausziehen bzw. Herausfallen durch ein Systemdruck geschützt sind, wobei das Verbindungselement vorzugsweise aus Kunststoff besteht.
